# EUROPÄISCHE PATENTSCHRIFT

(11) **EP 3 501 863 B1**
(45) Veröffentlichungstag und Bekanntmachung des Hinweises auf die Patenterteilung: **04.11.2020**
(21) Anmeldenummer: 18212197.0
(22) Anmeldetag: 13.12.2018
(51) Int. Cl.: B60D 5/00, B61D 17/20

(54) **BEGEHBARE BODENEINRICHTUNG FÜR EINEN ÜBERGANG**
ACCESSIBLE FLOOR DEVICE FOR A TRANSITION
DISPOSITIF DE SOL PRATICABLE POUR UNE PASSERELLE

(30) Priorität: 21.12.2017 AT 2892017 U
(43) Veröffentlichungstag der Anmeldung: 26.06.2019
(73) Patentinhaber: Hübner GmbH & Co. KG, 34123 Kassel (DE)
(72) Erfinder: Rudolph, Hans-Jakob, 34308 Bad Emstal (DE)
(74) Vertreter: Patentanwälte Walther Hinz Bayer PartGmbB

(56) Entgegenhaltungen:
- EP-A1- 2 394 877
- DE-U1- 20 312 575

## Beschreibung

Die Erfindung betrifft eine begehbare Bodeneinrichtung für einen Übergang zur Anordnung zwischen einem ersten Fahrzeugteil und einem sich in einer Längsrichtung anschließenden zweiten Fahrzeugteil, insbesondere eines Schienenfahrzeuges, aufweisend einen sich an einen höher gelegenen Fahrzeugflur des ersten Fahrzeugteils anschließenden ersten Abschnitt und wenigstens einen sich an einen niedriger gelegenen Fahrzeugflur des zweiten Fahrzeugteils anschließenden zweiten Abschnitt.

### STAND DER TECHNIK

Aus der DE 10 2013 218 547 B3 ist eine begehbare Bodeneinrichtung für einen Übergang zur Anordnung zwischen zwei Fahrzeugteilen eines Schienenfahrzeuges bekannt. Die begehbare Bodeneinrichtung ist im Wesentlichen ausgebildet aus einem ersten Abschnitt, der sich an einen ersten Fahrzeugteil anschließt und einen zweiten Abschnitt, der sich an einen zweiten Fahrzeugteil anschließt. Der erste Fahrzeugteil weist einen höher gelegenen Fahrzeugflur auf, und der zweite Fahrzeugteil weist einen gegenüber dem ersten Fahrzeugflur niedriger gelegenen Fahrzeugflur auf. Folgerichtig muss die begehbare Bodeneinrichtung die Höhendifferenz zwischen den beiden Fahrzeugfluren überbrücken. Hierzu befindet sich zwischen den beiden Abschnitten der Bodeneinrichtung eine Fuge, in der die beiden Abschnitte über Verbindungselemente gelenkig miteinander verbunden sind. Dadurch entsteht eine Knickbeweglichkeit der beiden Abschnitte zueinander, und der erste Abschnitt der Bodeneinrichtung besitzt Flächenbereiche mit einer reduzierten Dicke, sodass der erste Abschnitt bei einer Bewegung der Fahrzeugteile zueinander verformbar ist. Damit ist die begehbare Bodeneinrichtung aufwendig ausgestaltet, und für die einzelnen Abschnitte der Bodeneinrichtung müssen Abstützungen eingerichtet werden, da die Abschnitte der Bodeneinrichtung in Längsrichtung der Fahrzeugteile knickbeweglich miteinander verbunden sind, sodass die Bodeneinrichtung eine nur geringe strukturelle Steifigkeit aufweist. Das Dokument EP 2 394 877 A1 offenbart eine Bodeneinrichtung gemäß dem Oberbegriff des Anspruchs 1 und einen Übergang gemäß dem Oberbegriff des Anspruchs 12 auf.

Übergänge weisen in der Regel ein unterhalb der Bodeneinrichtung angeordnete Gelenk auf, über das die Fahrzeugteile miteinander verbunden sind. Die Anordnung des Gelenkes und der dazu notwendige Bauraum kann zudem erforderlich machen, dass die Bodeneinrichtung mit dem ersten Abschnitt höher verläuft und der zweite Abschnitt verläuft abgewinkelt zum ersten Abschnitt, sodass die Höhendifferenz zwischen dem ersten und dem zweiten Fahrzeugflur überbrückt werden kann.

### OFFENBARUNG DER ERFINDUNG

Aufgabe der Erfindung ist die Weiterbildung einer begehbaren Bodeneinrichtung mit einer vereinfachten Ausgestaltung und einer erhöhten Steifigkeit in Längsrichtung. Insbesondere soll die Bodeneinrichtung die Anordnung eines unterhalb der Bodeneinrichtung vorgesehenen Gelenkes ermöglichen, sodass die beiden Abschnitte der Bodeneinrichtung mit ihrer flächigen Erstreckung einen Winkel zueinander einschließen.

Diese Aufgabe wird ausgehend von einer begehbaren Bodeneinrichtung gemäß dem Oberbegriff des Anspruches 1 und ausgehend von einem Übergang gemäß dem Oberbegriff des Anspruches 8 mit den jeweils kennzeichnenden Merkmalen gelöst. Vorteilhafte Weiterbildungen der Erfindung sind in den abhängigen Ansprüchen angegeben.

Die Erfindung schlägt zur Lösung der voranstehenden Aufgabe vor, dass der erste Abschnitt und der wenigstens eine weitere Abschnitt eine in der Längsrichtung ausgebildete durchgehende, unterbrechungsfreie Struktur aufweisen.

Die wenigstens in Längsrichtung des Fahrzeugs einteilig ausgebildete Struktur der Bodeneinrichtung weist dabei mindestens zwei Abschnitte auf, die unter einem Winkel zueinander angeordnet sind, wobei die wenigstens zwei Abschnitte vorzugsweise materialeinheitlich und unterbrechungsfrei ineinander übergehen. Im Rahmen der Erfindung können dabei auch drei, vier oder noch mehr Abschnitte der Bodeneinrichtung in Fahrtrichtung vorhanden sein, und die Abschnitte selbst sind vorzugsweise plan ausgebildet und stehen mit einem dazwischenliegenden Knick unter einem Winkel zueinander. Sind mehr als zwei Abschnitte vorgesehen, so entsteht eine polygonartige Struktur der Bodeneinrichtung in Längsrichtung des Fahrzeugs. Von besonderem Vorteil kann auch eine Bodeneinrichtung sein, die in Längsrichtung zwei Anschlussabschnitte und einen Mittenabschnitt aufweist, somit also aufweisend insgesamt drei Abschnitte.

Die Bodeneinrichtung kann dabei quer zur Längsrichtung des Fahrzeuges mehrgliedrig ausgebildet sein und beispielsweise mehrere Segmente umfassen. Jedoch bilden sämtliche Segmente die mindestens ersten und zweiten Abschnitte mit unterschiedlichen Neigungen, die unterbrechungsfrei ineinander übergehen.

Die erfindungsgemäße Bodeneinrichtung ist mechanisch hoch belastbar und einfach ausgeführt, wobei die Bodeneinrichtung durch die Abschnitte mit unterschiedlichen Neigungen insbesondere dazu eingerichtet ist, über einem Gelenk angeordnet zu werden, das als Teil des Überganges die beiden Fahrzeugteile miteinander verbindet. Aus Gründen des erforderlichen Einbauraums für das Gelenk kann eine durchgehende Bodeneinrichtung mit einer über der gesamten Länge in Längsrichtung einheitlichen Neigung nicht ausgebildet werden, da dann Kollisionen mit dem Gelenk auftreten können. Durch den erfindungsgemäßen Knick zwischen den beiden Abschnitten der Bodeneinrichtung ermöglicht diese jedoch die Anordnung der Bodeneinrichtung über einem Gelenk, ohne dass es zu einer Berührung der Unterseite der Bodeneinrichtung mit dem Gelenk kommt, insbesondere wenn die beiden Fahrzeugteile zueinander bewegt werden.

Der mindestens eine Knick erhöht zusätzlich die mechanische Stabilität der Bodeneinrichtung in Vertikalrichtung, was einem Durchbiegen der Bodeneinrichtung entgegenwirkt, dieser ermöglicht aber dennoch eine elastische Verformung der Bodeneinrichtung beispielsweise bei Wankbewegungen der Fahrzeuge zueinander bzw. gegeneinander.

Erfindungsgemäß ist dabei zwischen dem ersten Abschnitt und dem mindestens zweiten Abschnitt eine Übergangskante ausgebildet. Dabei bilden eine begehbare Oberseite des ersten Abschnittes und/oder eine begehbare Oberseite des zweiten Abschnittes jeweils eine Planfläche, wobei sich die beiden Planflächen in der quer verlaufenden Übergangskante schneiden.

Gemäß einer Ausführungsvariante weist die Bodeneinrichtung auf der Oberseite einen Bodenbelag auf, der vorteilhaft dem Bodenbelag des übrigen Fahrzeugs gleich ist. Aufgrund des erfindungsgemäßen Knicks kann der Bodenbelag in Längsrichtung durchgängig und ohne Unterbrechung ausgeführt werden, damit also beispielsweise ohne eine Fuge oder ohne ein Scharnier.

Gemäß einer Ausführungsvariante weist die Bodeneinrichtung mehr als zwei Abschnitte in Längsrichtung auf, also beispielsweise einen ersten Abschnitt, der sich an das erste Fahrzeugteil anschließt, einen zweiten Abschnitt, der sich an das zweite Fahrzeug anschließt und mindestens einen weiteren Abschnitt, der sich zwischen dem ersten und dem zweiten Abschnitt befindet.

Ist die begehbare Bodeneinrichtung quer zur Längsrichtung mehrteilig ausgebildet, und werden dadurch mehrere Segmente der begehbaren Bodeneinrichtung gebildet, so sind diese vorzugsweise mit Verbindungselementen miteinander verbunden. Beispielsweise können die Verbindungselemente als Verbindungsbrücken ausgebildet sein und diese sind mit den Segmenten beispielsweise verschraubt. Dadurch wird der Vorteil erreicht, einzelne Segmente aus der Bodeneinrichtung entnehmen zu können, insbesondere um an das Gelenk zu gelangen und um dieses freizulegen, ohne dass die gesamte begehbare Bodeneinrichtung demontiert werden muss.

Die Segmente sind dabei so ausgebildet, dass diese an jeweils gleicher Stelle den Knick aufweisen, sodass die Übergangskante in den mehreren Segmenten auf einer gemeinsamen Knickachse liegen.

Mit besonderem Vorteil bildet der zweite Abschnitt eine Drehscheibe, die eine in Richtung zum niedriger gelegenen Fahrzeugflur weisende Kreiskontur aufweist. Über der äußeren Kreiskontur des als Drehscheibe ausgebildeten und geneigt angeordneten zweiten Abschnittes ist wenigstens eine Führungseinrichtung vorgesehen, die ein Verdrehen des zweiten Abschnittes gegenüber dem niedriger gelegenen Fahrzeugflur des zweiten Fahrzeugteils ermöglicht und eine Stufenbildung zwischen der Drehscheibe und dem Fahrzeugflur verhindert, insbesondere wenn das Fahrzeug eine Kurve durchfährt. Die Drehscheibe wird entsprechend elastisch verformt, dadurch entsteht eine Einspannung des zweiten Abschnittes der Bodeneinrichtung, wohingegen der erste Abschnitt der Bodeneinrichtung am ersten Fahrzeugteil fest angeordnet sein kann.

Gemäß einer weiteren Ausführungsform bildet der erste Abschnitt eine Drehscheibe, die eine in Richtung zum höher gelegenen Fahrzeugflur weisende Kreiskontur aufweist.

Mit weiterem Vorteil ist die Kreiskontur um einen Kreismittelpunkt herum ausgebildet, wobei der Kreismittelpunkt in der Übergangskante beziehungsweise in der Knickachse liegt. Mit besonderem Vorteil liegt der Kreismittelpunkt dabei auch in der Drehachse des Gelenkes, wobei auch ein lateraler Abstand zwischen dem Kreismittelpunkt und der Drehachse vorherrschen kann.

Vorteilhafterweise ist der zweite Abschnitt in einer am zweiten Fahrzeugteil gehaltenen Führungseinrichtung aufgenommen, und eine mit dem zweiten Abschnitt verbundene Führungsscheibe ist zwischen einem oberen Führungsteil und einem unteren Führungsteil der Führungseinrichtung angeordnet. Dadurch wird sichergestellt, dass die Bodeneinrichtung in einem vorgegebenen Bereich gehalten und geführt ist und ein ebener

Übergang zwischen dem ersten Fahrzeugteil und dem zweiten Fahrzeugteil bereitgestellt ist.

Bei einer Drehbewegung, einer Nickbewegung, einer Wankbewegung oder eines Querversatzes kann es zu Relativbewegungen, einer Verschiebung oder einem Versatz zwischen dem ersten Fahrzeugteil und dem zweiten Fahrzeugteil kommen. Um auch bei solchen Bewegungen einen bündigen und gleichmäßigen Übergang zwischen dem höher gelegenen Fahrzeugflur, der Bodeneinrichtung und dem niedriger gelegenen Fahrzeugflur sicherzustellen, ist mindestens einer der Abschnitte elastisch verformbar ausgestaltet. Insbesondere wird durch die elastische Ausgestaltung der Bodeneinrichtung einem Durchbrechen oder einer dauerhaften Verformung der Bodeneinrichtung vorgebeugt.

Die Erfindung richtet sich weiterhin auf einen Übergang mit einer begehbaren Bodeneinrichtung zwischen einem ersten Fahrzeugteil und einem sich einer Längsrichtung anschließenden zweiten Fahrzeugteil, insbesondere eines Schienenfahrzeuges, aufweisend einen sich an einen höher gelegenen Fahrzeugflur des ersten Fahrzeugteils anschließenden ersten Abschnitt und einen sich an einen niedriger gelegenen Fahrzeugflur des zweiten Fahrzeugteils anschließenden zweiten Abschnitt. Erfindungsgemäß weisen dabei der erste Abschnitt und der zweite Abschnitt eine in der Längsrichtung ausgebildete durchgehende, unterbrechungsfreie Struktur auf. Die weiteren Merkmale und zugeordneten Vorteile der begehbaren Bodeneinrichtung finden für den erfindungsgemäßen Übergang ebenfalls Anwendung.

Insbesondere ist unterhalb der begehbaren Bodeneinrichtung ein Gelenk zur beweglichen Verbindung der beiden Fahrzeugteile angeordnet, und die begehbare Bodeneinrichtung ist mit ihrer in Längsrichtung einteiligen Struktur um das Gelenk gewissermaßen herum angeordnet, wobei die beiden Abschnitte der Bodeneinrichtung zueinander geneigt ausgebildet sind. Mit besonderem Vorteil kreuzt dabei die Drehachse des Gelenkes die Übergangskante, die sich zwischen den beiden Abschnitten der Bodeneinrichtung durch den ausgebildeten Knick ergibt. Insbesondere ist vorgesehen, dass in der Längsrichtung zwischen dem ersten Abschnitt und dem zweiten Abschnitt wenigstens ein weiterer Abschnitt vorgesehen ist, wobei die Abschnitte im Wesentlichen in sich plan ausgebildet sind und zwischen diesen liegende Übergangskanten bilden.

Mit weiterem Vorteil ist das Gelenk mit einem ersten Gelenkadapter am ersten Fahrzeugteil und mit einem zweiten Gelenkadapter am zweiten Fahrzeugteil anbindbar, wobei der erste Abschnitt der begehbaren Bodeneinrichtung über wenigstens ein Auflageelement auf dem ersten Gelenkadapter oberseitig abgestützt ist und/oder wobei der zweite Abschnitt der begehbaren Bodeneinrichtung über ein Gleitstück oberseitig auf dem zweiten Gelenkadapter gleitend abgestützt ist. Der Gelenkadapter kann als separates Bauteil zwischen Gelenk und Fahrzeugteil, als Teil des Gelenks oder als Teil des Fahrzeugteils ausgebildet sein.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Seitenansicht eines Übergangs mit einer begehbaren Bodeneinrichtung,
- Figur 2: eine Draufsicht auf die begehbare Bodeneinrichtung und
- Figur 3: eine Detailansicht einer Führungseinrichtung zur Führung eines als Drehscheibe ausgebildeten zweiten Abschnittes der begehbaren Bodeneinrichtung.

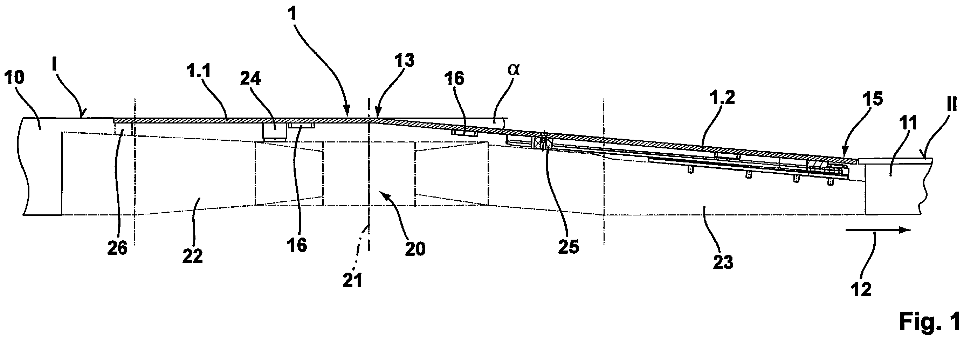

In Figur 1 ist eine begehbare Bodeneinrichtung 1 dargestellt, die als Teil eines Übergangs zwischen einem ersten Fahrzeugteil 10 und einem zweiten Fahrzeugteil 11 ausgebildet ist. Die beiden Fahrzeugteile 10 und 11 erstrecken sich in einer Längsrichtung 12. Der erste Fahrzeugteil 10 weist einen höhergelegenen Fahrzeugflur I auf, und der sich in Längsrichtung 12 anschließende zweite Fahrzeugteil 11 weist einen gegenüber dem ersten Fahrzeugflur I niedriger gelegenen Fahrzeugflur II auf. Die beiden Fahrzeugteile 10 und 11 sind mit einem Gelenk 20 miteinander verbunden, und das Gelenk 20 ermöglicht eine Verdrehung der beiden Fahrzeugteile 10 und 11 wenigstens um eine vertikal gelegene Drehachse 21. Zur Anbindung des Gelenkes 20 an dem ersten Fahrzeugteil 10 dient ein erster Gelenkadapter 22, und zur Anbindung des Gelenkes 20 an dem zweiten Fahrzeugteil 11 dient ein zweiter Gelenkadapter 23.

Die begehbare Bodeneinrichtung 1 ist dazu ausgebildet, den Höhenunterschied zwischen dem höher gelegenen Fahrzeugflur I und dem niedriger gelegenen Fahrzeugflur II auszugleichen. Hierfür weist die begehbare Bodeneinrichtung 1 einen ersten Abschnitt 1.1 auf, der sich in der Höhe des höher gelegenen Fahrzeugflurs I erstreckt, und die Bodeneinrichtung 1 weist einen zweiten Abschnitt 1.2 auf, der sich endseitig an dem niedriger gelegenen Fahrzeugflur II anschließt. Zur Aufnahme und Führung des zweiten Abschnittes 1.2, der als Drehscheibe ausgebildet ist, dient eine Führungseinrichtung 15.

Erfindungsgemäß weist die begehbare Bodeneinrichtung 1 zwischen dem ersten Abschnitt 1.1 und dem zweiten Abschnitt 1.2 eine in Längsrichtung 12 ausgebildete durchgehende, unterbrechungsfreie Struktur auf. Durch die unterschiedlichen Neigungen der beiden Abschnitt 1.1 und 1.2 ergibt sich eine Übergangskante 13, wobei der Knickwinkel α die geneigte Anordnung des zweiten Abschnittes 1.2 gegenüber dem ersten Abschnitt 1.1 der Bodeneinrichtung 1 verdeutlicht.

Die Abbildung macht deutlich, dass die durchgehende Bodeneinrichtung 1 mit der ausgebildeten Übergangskante 13 in gewisser Weise um das Gelenk 20 herum angeordnet ist, und der erste Abschnitt 1.1 verläuft in einer Horizontalen und schließt sich ohne Höhendifferenz an den höher gelegenen Fahrzeugflur I an. In Längsrichtung 12 folgt auf den ersten Abschnitt 1.1 der zu diesem unter einem Knickwinkel α geneigt angeordnete zweite Abschnitt 1.2, der sich endseitig an die Höhe des niedriger gelegenen Fahrzeugflurs II anschließt. Die Bodeneinrichtung 1 ist damit in Längsrichtung 12 unterbrechungsfrei, materialeinheitlich und strukturell einteilig ausgebildet, wobei quer zur Längsrichtung die Bodeneinrichtung 1 durchaus aus mehreren Segmenten ausgebildet sein kann.

Zur Verbindung der mehreren Segmente dienen Verbindungselemente 16, die unterseitig der Bodeneinrichtung 1 angeordnet sind. Zum Abstützen des ersten Abschnittes 1.1 dient ein Auflageelement 24, über das der erste Abschnitt 1.1 der Bodeneinrichtung 1 auf dem ersten Gelenkadapter 22 oberseitig abgestützt ist. Der erste Abschnitt 1.1 ist mit einem oder mehreren Befestigungselementen 26 am ersten Fahrzeugteil 10 fest angeordnet, sodass die Bodeneinrichtung 1 im Wesentlichen starr am ersten Fahrzeugteil 10 angeordnet ist. Dadurch, dass sich der zweite Gelenkadapter 23 gegenüber dem ersten Gelenkadapter 22 durch die Beweglichkeit im Gelenk 20 verdrehen kann, ist der zweite Abschnitt 1.2 mit einem Gleitstück 25 auf der Oberseite des zweiten Gelenkadapters 23 abgestützt. Damit ist die in Längsrichtung 12 strukturell einteilig ausgebildete Bodeneinrichtung 1 begehbar und kann entsprechende Belastungen tragen, und die Bodeneinrichtung 1 kann aus einem Aluminium-Blechmaterial ausgebildet sein, insbesondere mit einer Stärke von beispielsweise 6 mm bis 10 mm und vorzugsweise 8 mm. Die Oberseite der Bodeneinrichtung 1 kann mit einem Belag versehen werden oder die Oberseite kann eine Struktur aufweisen, beispielsweise eine Riffelung.

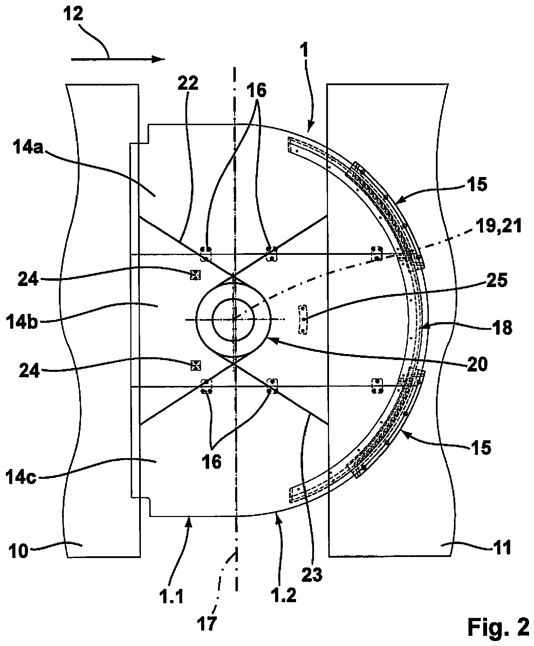

Figur 2 zeigt eine Draufsicht auf die begehbare Bodeneinrichtung 1 zwischen den beiden Fahrzeugteilen 10 und 11, und der erste Abschnitt 1.1 grenzt in einer Knickachse 17 an den zweiten Abschnitt 1.2 an. Der erste Abschnitt 1.1 ist fest am ersten Fahrzeugteil 10 angeordnet, und der zweite Abschnitt 1.2 ist als Drehscheibe ausgeführt und mit Führungseinrichtungen 15 am zweiten Fahrzeugteil 11 verdrehbar aufgenommen. Die Draufsicht zeigt weiterhin die Verbindungselemente 16 zur Verbindung der jeweiligen Segmente 14a, 14b und 14c, wobei die Segmente 14a, 14b und 14c nebeneinander angeordnet sind, und es ist erkennbar, dass die jeweiligen Segmente 14a, 14b und 14c in Längsrichtung 12 strukturell durchgehend ausgebildet sind, die damit jeweils einen ersten Abschnitt 1.1 und einen zweiten Abschnitt 1.2 aufweisen. Die Knickachse 17 bildet dabei diejenige Achse, in der sich die beiden Abschnitt 1.1 und 1.2 treffen, und unter einem Winkel zueinander angestellt sind.

Durch die Ausbildung des zweiten Abschnittes 1.2 als Drehscheibe weist diese eine Kreiskontur 18 auf, die drehbeweglich in den Führungseinrichtungen 15 aufgenommen ist. Damit kann eine Verdrehung des ersten Fahrzeugteils 10 gegenüber dem zweiten Fahrzeugteil 11 in der Drehachse 21 ausgeführt werden, wobei die beiden Fahrzeugteile 10 und 11 mit dem Gelenk 20 miteinander verbunden sind. Die Drehachse 21 fällt dabei beispielhaft mit dem Kreismittelpunkt 19 zusammen, die den Mittelpunkt der Kreiskontur 18 bildet. Die Darstellung zeigt weiterhin ein Gleitstück 25 unterhalb des zweiten Abschnittes 1.2, mit dem der zweite Abschnitt 1.2 auf dem zweiten Gelenkadapter 23 abgestützt ist. Der erste Abschnitt 1.1 ist mit zwei Auflageelementen 24 auf dem ersten Gelenkadapter 22 abgestützt.

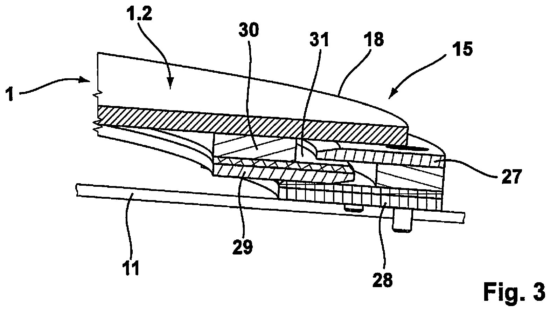

Figur 3 zeigt eine Detailansicht der Führungseinrichtung 15 zur geführten Aufnahme des zweiten Abschnittes 1.2 der begehbaren Bodeneinrichtung 1, wobei die Führungseinrichtung 15 mit einem Strukturbauteil des zweiten Fahrzeugteils 11 verbunden ist. Die Führungseinrichtung weist einen oberen Führungsteil 27 und einen unteren Führungsteil 28 auf, und zwischen den Führungsteilen 27 und 28 befindet sich eine Führungsscheibe 29, die über ein Verbindungselement 30 mit dem zweiten Abschnitt 1.2 der Bodeneinrichtung 1 verbunden ist. Wird der zweite Abschnitt 1.2 der Bodeneinrichtung 1 verdreht, so kann die Führungsscheibe 29 zwischen dem oberen und unteren Führungsteil 27 und 28 bewegt werden, wobei die Bewegung auf dem Kreisbogen der Kreiskontur 18 erfolgt. Die Führungsscheibe 29 ist dabei mit besonderem Vorteil zwischen den beiden oberen und unteren Führungsteilen 27 und 28 eingefasst, sodass nicht die Möglichkeit besteht, den zweiten Abschnitt 1.2 der Bodeneinrichtung 1 vom Fahrzeugteil 11 abzuheben, zum Beispiel im Falle einer Knickbewegung oder Wankbewegung der Fahrzeugteile zueinander. Die Nickbewegung ist eine Bewegung, die im Wesentlichen um die quer verlaufende Knickachse 17 erfolgt, die Wankbewegung ist eine Bewegung, die im Wesentlichen um die Längsrichtung 12 erfolgt. Erfolgt eine Nickbewegung des Fahrzeugs, so ergibt sich daraus eine Schubbewegung des zweiten Abschnittes 1.2 relativ zur Führungseinrichtung 15. Um diese Schubbewegung ausgleichen zu können, befindet sich ein Spalt 31 vor dem Verbindungselement 30. Eine Nickbewegung, eine Wankbewegung oder eine Drehbewegung mit großer Auslenkung wird durch eine elastische Verformung der Bodeneinrichtung 1 kompensiert, und es wird dabei ein ebener und ein stufenloser Übergang zwischen dem zweiten Abschnitt 1.2 und dem Fahrzeugflur II beibehalten. Dabei kommt bei einer großen Auslenkung der obere Führungsteil 27 oder der untere Führungsteil 28 mit der Führungsscheibe 29 in Kontakt oder liegt daran an. Analog dazu kommt der obere Führungsteil 27 mit dem Verbindungselement 30 in Kontakt. Dabei nimmt die Bodeneinrichtung 1, insbesondere der zweite Abschnitt 1.2, mittels einer elastischen Verformung eine Spannung auf, die bei der Auslenkung unter Anlage entsteht. Es ergibt sich ein stufenloser Übergang vom ersten Fahrzeugteil 10 über die begehbare Bodeneinrichtung 1 zum zweiten Fahrzeugteil 11.

Gemäß einer weiteren, nicht dargestellten Ausführungsform weist der zweite Abschnitt 1.2, der als Kreiskontur ausgebildet ist, in Richtung des höher gelegenen Fahrzeugteils 10. Die Führungseinrichtung 15 ist bei dieser Ausführungsform entsprechend zur Führung des zweiten Abschnitts 1.2 am höher gelegenen Fahrzeugteil 10 angeordnet.

Die Erfindung beschränkt sich in ihrer Ausführung nicht auf das vorstehend angegebene bevorzugte Ausführungsbeispiel.

### Bezugszeichenliste:

- 1: begehbare Bodeneinrichtung
- 1.1: ersten Abschnitt
- 1.2: zweiter Abschnitt
- 10: Fahrzeugteil
- 11: Fahrzeugteil
- 12: Längsrichtung
- 13: Übergangskante
- 14a: Segment
- 14b: Segment
- 14c: Segment
- 15: Führungseinrichtung
- 16: Verbindungselement
- 17: Knickachse
- 18: Kreiskontur
- 19: Kreismittelpunkt
- 20: Gelenk
- 21: Drehachse
- 22: erster Gelenkadapter
- 23: zweiter Gelenkadapter
- 24: Auflageelement
- 25: Gleitstück
- 26: Befestigungselement
- 27: oberer Führungsteil
- 28: unterer Führungsteil
- 29: Führungsscheibe
- 30: Verbindungselement
- 31: Spalt
- I: höher gelegener Fahrzeugflur
- II: niedriger gelegener Fahrzeugflur
- α: Knickwinkel

## Patentansprüche

1. Begehbare Bodeneinrichtung (1) für einen Übergang zur Anordnung zwischen einem ersten Fahrzeugteil (10) und einem sich in einer Längsrichtung (12) anschließenden zweiten Fahrzeugteil (11), insbesondere eines Schienenfahrzeuges, aufweisend einen sich an einen höher gelegenen Fahrzeugflur (I) des ersten Fahrzeugteils (10) anschließenden ersten Abschnitt (1.1) und wenigstens einen sich an einen niedriger gelegenen Fahrzeugflur (II) des zweiten Fahrzeugteils (11) anschließenden zweiten Abschnitt (1.2),
**dadurch gekennzeichnet,**
**dass** der erste Abschnitt (1.1) und der wenigstens eine weitere Abschnitt (1.2) eine in der Längsrichtung (12) einteilig ausgebildete, durchgehende, unterbrechungsfreie Struktur aufweisen.

2. Begehbare Bodeneinrichtung (1) nach Anspruch 1,
**dadurch gekennzeichnet,**
**dass** zwischen dem ersten Abschnitt (1.1) und dem zweiten Abschnitt (1.2) oder jedem weiteren Abschnitt eine Übergangskante (13) ausgebildet ist und/oder wobei weitere Übergangskanten zwischen jedem weiteren Abschnitt ausgebildet sind.

3. Begehbare Bodeneinrichtung (1) nach Anspruch 1 oder 2,
**dadurch gekennzeichnet,**
**dass** eine begehbare Oberseite des ersten Abschnittes (1.1) und/oder eine begehbare Oberseite des zweiten Abschnittes (1.2) und/oder eine begehbare Oberseite eines weiteren Abschnitts eine Planfläche bilden.

4. Begehbare Bodeneinrichtung (1) nach Anspruch 1 bis 3,
**dadurch gekennzeichnet,**
**dass** die Bodeneinrichtung (1) auf der Oberseite einen Bodenbelag aufweist, der auf der Oberseite gebildet ist oder auf dieser aufgebracht ist.

5. Begehbare Bodeneinrichtung (1) nach einem der Ansprüche 1 bis 4,
**dadurch gekennzeichnet,**
**dass** die begehbare Bodeneinrichtung (1) quer zur Längsrichtung (12) mehrteilig ausgebildet ist, wobei mehrere Segmente (14a, 14b, 14c) die begehbare Bodeneinrichtung (1) bilden und mittels Verbindungselementen (16) miteinander verbunden sind.

6. Begehbare Bodeneinrichtung (1) nach einem der Ansprüche 2 bis 5,
**dadurch gekennzeichnet,**
**dass** die Übergangskanten (13) in den mehreren Segmenten (14a, 14b, 14c) auf einer gemeinsamen Knickachse (17) liegen.

7. Begehbare Bodeneinrichtung (1) nach einem der vorgenannten Ansprüche,
**dadurch gekennzeichnet,**
**dass** der zweite Abschnitt (1.2) eine Drehscheibe bildet und eine in Richtung zum niedriger gelegenen Fahrzeugflug (II) oder zum höher gelegenen Fahrzeugflur (I) weisende Kreiskontur (18) aufweist.

8. Begehbare Bodeneinrichtung (1) nach Anspruch 7,
**dadurch gekennzeichnet,**
**dass** die Kreiskontur (18) um einen Kreismittelpunkt (19) herum ausgebildet ist, wobei der Kreismittelpunkt (19) in oder nahe der Übergangskante (13) bzw. in oder nahe der Knickachse (17) liegt.

9. Begehbare Bodeneinrichtung (1) nach einem der vorgenannten Ansprüche,
**dadurch gekennzeichnet,**
**dass** der zweite Abschnitt (1.2) in einer am zweiten Fahrzeugteil (11) gehaltenen Führungseinrichtung (15) aufgenommen ist.

10. Begehbare Bodeneinrichtung (1) nach Anspruch 9,
**dadurch gekennzeichnet,**
**dass** eine mit dem zweiten Abschnitt (1.2) verbundene Führungsscheibe (29) zwischen einem oberen Führungsteil (27) und einem unteren Führungsteil (28) der Führungseinrichtung (15) angeordnet ist.

11. Begehbare Bodeneinrichtung (1) nach einem der vorangehenden Ansprüche,
**dadurch gekennzeichnet,**
**dass** die begehbare Bodeneinrichtung (1) mit mindestens einem der Abschnitte (1.1, 1.2) zur Beibehaltung eines bündigen Übergangs zwischen dem ersten Fahrzeugteil (10) und dem zweiten Fahrzeugteil (11) derart elastisch ausgeführt ist, dass bei einer Drehbewegung, einer Nickbewegung oder einer Wankbewegung des ersten Fahrzeugteils (10) und/oder des zweiten Fahrzeugteils (11) die Relativbewegung der Fahrzeugteile (10,11) zueinander mit oder in der begehbaren Bodeneinrichtung (1) und/oder mit oder in mindestens einem der Abschnitte (1.1, 1.2) ausgeglichen wird.

12. Übergang mit einer begehbaren Bodeneinrichtung (1) zwischen einem ersten Fahrzeugteil (10) und einem sich in einer Längsrichtung (12) anschließenden zweiten Fahrzeugteil (11), insbesondere eines Schienenfahrzeuges, aufweisend einen sich an einen höher gelegenen Fahrzeugflur (I) des ersten Fahrzeugteils (10) anschließenden ersten Abschnitt (1.1) und wenigstens einen sich an einen niedriger gelegenen Fahrzeugflur (II) des zweiten Fahrzeugteils (11) anschließenden zweiten Abschnitt (1.2),
**dadurch gekennzeichnet,**
**dass** der erste Abschnitt (1.1) und der wenigstens eine zweite Abschnitt (1.2) eine in der Längsrichtung (12) einteilig ausgebildete durchgehende, unterbrechungsfreie Struktur aufweisen.

13. Übergang nach Anspruch 12,
**dadurch gekennzeichnet,**
**dass** unterhalb der begehbaren Bodeneinrichtung (1) ein Gelenk (20) zur beweglichen Verbindung der beiden Fahrzeugsteile (10, 11) angeordnet ist und/oder wobei die Drehachse (21) des Gelenkes (20) die Übergangskante (13) kreuzt.

14. Übergang nach Anspruch 12 oder 13,
**dadurch gekennzeichnet,**
**dass** in der Längsrichtung (12) zwischen dem ersten Abschnitt (1.1) und dem zweiten Abschnitt (1.2) wenigstens ein weiterer Abschnitt vorgesehen ist, wobei die Abschnitte im Wesentlichen in sich plan ausgebildet sind und zwischen diesen liegende Übergangskanten (13) bilden.

15. Übergang nach Anspruch 13,
**dadurch gekennzeichnet,**
**dass** das Gelenk (20) mit einem ersten Gelenkadapter (22) am ersten Fahrzeugteil (10) und mit einem zweiten Gelenkadapter (23) am zweiten Fahrzeugteil (11) anbindbar ist, wobei der erste Abschnitt (1.1) der begehbaren Bodeneinrichtung (1) über wenigstens ein Auflageelement (24) auf dem ersten Gelenkadapter (22) oberseitig abgestützt ist und/oder wobei der zweite Abschnitt (1.2) der begehbaren Bodeneinrichtung (1) über ein Gleitstück (25) oberseitig auf dem zweiten Gelenkadapter (23) gleitend abgestützt ist.

## Claims

1. A walkable floor arrangement (1) for a gangway for arrangement between a first vehicle part (10) and a second vehicle part (11) adjoining in a longitudinal direction (12), in particular of a rail vehicle, comprising a first section (1.1) adjoining a higher-lying vehicle corridor (I) of the first vehicle part (10) and at least one second section (1.2) adjoining a lower vehicle floor (II) of the second vehicle part (11), **characterised in that**
the first section (1.1) and the at least one further section (1.2) comprise a continuous, uninterrupted structure which is formed in one piece in the longitudinal direction (12).

2. The walkable floor arrangement (1) according to claim 1,
**characterised in that**
a transition edge (13) is formed between the first section (1.1) and the second section (1.2) or each further section and/or wherein further transition edges are formed between each further section.

3. The walkable floor arrangement (1) according to claim 1 or 2,
**characterized in that**
a walkable upper side of the first section (1.1) and/or a walkable upper side of the second section (1.2) and/or a walkable upper side of a further section form a flat surface.

4. The walkable floor arrangement (1) according to claim 1 to 3,
**characterised in that**
the floor arrangement (1) comprises a floor covering on the upper side, which is formed on or applied to the upper side.

5. The walkable floor arrangement (1) according to one of the claims 1 to 4,
**characterised in that**
the walkable floor arrangement (1) is formed in several parts transversely to the longitudinal direction (12), wherein several segments (14a, 14b, 14c) form the walkable floor arrangement (1) and are connected to one another by means of connecting elements (16).

6. The walkable floor arrangement (1) according to one of the claims 2 to 5,
**characterised in that**
the transition edges (13) in the several segments (14a, 14b, 14c) are located on a common bending axis (17).

7. The walkable floor arrangement (1) according to one of the aforementioned claims,
**characterised in that**
the second section (1.2) forms a turntable and comprises a circular contour (18) pointing in the direction of the lower vehicle corridor (II) or the higher vehicle corridor (I)

8. The walkable floor arrangement (1) according to claim 7,
**characterised in that**
the circular contour (18) is formed around a circle centre (19), wherein the circle centre (19) is located in or near the transition edge (13) or in or near the bending axis (17).

9. The walkable floor arrangement (1) according to one of the aforementioned claims,
**characterised in that**
the second section (1.2) is received in a guide arrangement (15) held on the second vehicle part (11).

10. The walkable floor arrangement (1) according to claim 9,
**characterised in that**
a guide disc (29) connected to the second section (1.2) is disposed between an upper guide part (27) and a lower guide part (28) of the guide arrangement (15).

11. The walkable floor arrangement (1) according to one of the aforementioned claims,
**characterised in that**
in order to maintain a flush gangway between the first vehicle part (10) and the second vehicle part (11), the walkable floor arrangement (1) is formed with at least one of the sections (1.1, 1.2) being elastic in such a manner, that, in the event of a rotational movement, a pitching movement or a rolling movement of the first vehicle part (10) and/or of the second vehicle part (11), the relative movement of the vehicle parts (10, 11) with respect to one another is compensated with or in the walkable floor arrangement (1) and/or with or in at least one of the sections (1.1, 1.2).

12. A gangway with a walkable floor arrangement (1) between a first vehicle part (10) and a second vehicle part (11) adjoining it in a longitudinal direction (12), in particular of a rail vehicle, comprising a first section (1.1) adjoining a higher-lying vehicle corridor (I) of the first vehicle part (10) and at least one second section (1.2) adjoining a lower-lying vehicle corridor (II) of the second vehicle part (11), **characterised in that**
the first section (1.1) and the at least one second section (1.2) have a continuous, uninterrupted structure formed in one piece in the longitudinal direction (12).

13. The gangway according to claim 12,
**characterised in that**
an articulation (20) for movably connecting the two vehicle parts (10, 11) is disposed below the walkable floor arrangement (1) and/or wherein the axis of rotation (21) of the articulation (20) crosses the transition edge (13).

14. The gangway according to claim 12 or 13,
**characterised in that**
at least one further section is provided in the longitudinal direction (12) between the first section (1.1) and the second section (1.2), wherein the sections are substantially planar as such and form transition edges (13) located between them.

15. The gangway according to claim 13,
**characterised in that**
the articulation (20) can be attached with a first articulation adapter (22) to the first vehicle part (10) and with a second articulation adapter (23) to the second vehicle part (11), wherein the first section (1.1) of the walkable floor arrangement (1) is supported at the top on the first articulation adapter (22) via at least one support element (24) and/or wherein the second section (1.2) of the walkable floor arrangement (1) is supported in a sliding manner at the top on the second articulation adapter (23) via a sliding piece (25).

## Revendications

1. Dispositif de plancher praticable (1) pour un passage destiné à être agencé entre une première partie de véhicule (10) et une deuxième partie de véhicule (11) qui lui est adjacente dans une direction longitudinale (12), en particulier d'un véhicule ferroviaire, comportant une première section (1.1) qui se raccorde à un couloir de véhicule (1) de la première partie de véhicule (10) plus élevé et au moins une deuxième section (1.2) qui se raccorde à un couloir de véhicule (II) de la deuxième partie de véhicule (11) plus bas,
**caractérisé en ce que**
la première section (1.1) et l'au moins une autre section (1.2) ont une structure continue et ininterrompue qui est formée d'une seule pièce dans la direction longitudinale (12).

2. Dispositif de plancher praticable (1) selon la revendication 1,
**caractérisé en ce qu'**
un bord de passage (13) est formé entre la première section (1.1) et la deuxième section (1.2) ou chaque section supplémentaire et/ou où d'autres bords de passage sont formés entre chaque section supplémentaire.

3. Dispositif de plancher praticable (1) selon la revendication 1 ou 2,
**caractérisé en ce qu'**
un côté supérieur praticable de la première section (1.1) et/ou un côté supérieur praticable de la deuxième section (1.2) et/ou un côté supérieur praticable d'une autre section forment une surface plane.

4. Dispositif de plancher praticable (1) selon les revendications 1 à 3,
**caractérisé en ce que**
le dispositif de plancher (1) présente sur le côté supérieur un revêtement de sol, qui est formé sur le côté supérieur ou qui est appliqué sur celui-ci.

5. Dispositif de plancher praticable (1) selon l'une des revendications 1 à 4,
**caractérisé en ce que**
le dispositif de plancher praticable (1) est formé en plusieurs parties transversalement à la direction longitudinale (12), où plusieurs segments (14a, 14b, 14c) forment le dispositif de plancher praticable (1) et sont reliés entre eux au moyen d'éléments de liaison (16).

6. Dispositif de plancher praticable (1) selon l'une des revendications 2 à 5,
**caractérisé en ce que**
les bords de passage (13) dans les différents segments (14a, 14b, 14c) se trouvent sur un axe de pliage commun (17).

7. Dispositif de plancher praticable (1) selon l'une des revendications précédentes,
**caractérisé en ce que**
la deuxième section (1.2) forme un disque rotatif et présente un contour circulaire (18) orienté en direction du couloir de véhicule (II) plus bas ou du couloir de véhicule (I) plus élevé.

8. Dispositif de plancher praticable (1) selon la revendication 7, **caractérisé en ce que**
le contour circulaire (18) est formé autour d'un centre de cercle (19), où le centre de cercle (19) est situé dans ou près du bord de passage (13) ou dans ou près de l'axe de pliage (17).

9. Dispositif à plancher praticable (1) selon l'une des revendications précédentes,
**caractérisé en ce que**
la deuxième section (1.2) est reçue dans un dispositif de guidage (15) maintenu au niveau de la deuxième partie de véhicule (11).

10. Dispositif de plancher praticable (1) selon la revendication 9,
**caractérisé en ce qu'**
un disque de guidage (29) relié à la deuxième section (1.2) est disposé entre une partie de guidage supérieure (27) et une partie de guidage inférieure (28) du dispositif de guidage (15).

11. Dispositif de plancher praticable (1) selon l'une des revendications précédentes,
**caractérisé en ce que**
pour maintenir une transition affleurante entre la première partie de véhicule (10) et la deuxième partie de véhicule (11), le dispositif de plancher praticable (1) est formé avec au moins une des sections (1.1, 1.2) de manière élastique, de telle sorte qu'en cas de mouvement de rotation, de tangage ou de roulis de la première partie de véhicule (10) et/ou de la deuxième partie de véhicule (11), le mouvement relatif des parties de véhicule (10, 11) l'une par rapport à l'autre est compensé avec ou dans le dispositif de plancher praticable (1) et/ou avec ou dans au moins une des sections (1.1, 1.2).

12. Passage avec un dispositif de plancher praticable (1) entre une première partie de véhicule (10) et une deuxième partie de véhicule (11) adjacente dans une direction longitudinale (12), en particulier d'un véhicule ferroviaire, comportant une première section (1.1) qui se raccorde à un couloir de véhicule (I) plus élevé de la première partie de véhicule (10) et au moins une deuxième section (1.2) qui se raccorde à un couloir de véhicule (II) plus bas de la deuxième partie de véhicule (11),
**caractérisé en ce que**
la première section (1.1) et l'au moins une deuxième section (1.2) présentent une structure continue, ininterrompue, formée d'une seule pièce dans la direction longitudinale (12).

13. Passage selon la revendication 12,
**caractérisé en ce qu'**
une articulation (20) pour la liaison mobile des deux parties de véhicule (10, 11) est disposée sous le dispositif de plancher praticable (1) et/ou où l'axe de rotation (21) de l'articulation (20) croise le bord de passage (13).

14. Passage selon la revendication 12 ou 13,
**caractérisé en ce qu'**
au moins une autre section est prévue entre la première section (1.1) et la deuxième section (1.2) dans la direction longitudinale (12), où les sections sont essentiellement planes en elles-mêmes et forment des bords de passage (13) situés entre elles.

15. Passage selon la revendication 13,
caractérisé en ce
l'articulation (20) peut être reliée à la première partie de véhicule (10) au moyen d'un premier adaptateur d'articulation (22) et à la deuxième partie de véhicule (11) au moyen d'un deuxième adaptateur d'articulation (23), où la première section (1.1) du dispositif de plancher praticable (1) est soutenue par le côté supérieur du premier adaptateur d'articulation (22) par l'intermédiaire d'au moins un élément de support (24) et/ou où la deuxième section (1.2) du dispositif de plancher praticable (1) est soutenue de manière coulissante par le côté supérieur du deuxième adaptateur d'articulation (23) par l'intermédiaire d'une pièce coulissante (25).
